# EUROPÄISCHE PATENTSCHRIFT

(11) **EP 3 029 438 B1**
(45) Veröffentlichungstag und Bekanntmachung des Hinweises auf die Patenterteilung: **25.10.2017**
(21) Anmeldenummer: 15003130.0
(22) Anmeldetag: 02.11.2015
(51) Int. Cl.: G01J 1/42, G01J 1/04, H01S 3/00

(54) **ÜBERWACHUNGSVORRICHTUNG FÜR EINEN LASERSTRAHL**
MONITORING DEVICE FOR A LASER BEAM
DISPOSITIF DE SURVEILLANCE POUR UN RAYON LASER

(30) Priorität: 15.11.2014 DE 102014016889
(43) Veröffentlichungstag der Anmeldung: 08.06.2016
(73) Patentinhaber: MBDA Deutschland GmbH, 86529 Schrobenhausen (DE)
(72) Erfinder: Beidenhauser, Georg, D-86673 Bergheim (DE)
(74) Vertreter: Isarpatent

(56) Entgegenhaltungen:
- EP-A1- 2 145 720
- JP-A- S6 188 992
- US-A- 4 311 142
- US-A- 4 792 690
- US-A- 5 442 154
- US-A1- 2002 108 939
- US-A1- 2010 245 830

## Beschreibung

Die vorliegende Erfindung betrifft eine Überwachungsvorrichtung für einen Laserstrahl. Außerdem betrifft die Erfindung eine Laservorrichtung zum Aussenden von Laserlicht, die eine derartige Überwachungsvorrichtung umfasst. Schließlich betrifft die Erfindung ein Verfahren zum Überwachen eines Laserstrahls.

Technische Systeme, in denen Laserstrahlung verwendet wird, erfordern, dass sich dieser Laserstrahl auf einem zuvor festgelegten Weg ausbreitet. Verlässt der Strahl, beispielsweise in einem Fehlerfall, diesen zuvor festgelegten Weg, so kann es zu einem Funktionsausfall des Systems und/oder zu dessen Beschädigung kommen. Dieses kann sowohl durch direkte als auch indirekte, d. h. reflektierte, Laserstrahlung geschehen. Aus diesem Grund ist es notwendig zu überprüfen, ob sich der Laserstrahl auf dem zuvor festgelegten Weg befindet oder nicht.

Aus dem Stand der Technik, beispielsweise aus den Druckschriften EP 2 145 720 A1, US 2010/0245830 A1, und US 4 792 690 A, sind lichtempfindliche Sensoren bekannt, mit denen bei entsprechender Anzahl und Anordnung überprüft werden kann, ob sich der Laserstrahl auf dem zuvor festgelegten Weg befindet. Abhängig von der Geometrie des zu überwachenden Raumes können dazu sehr viele Sensoren notwendig sein, da jeder Sensor nur einen begrenzten Erfassungsbereich aufweist. Es ist also notwendig, mehrere Sensoren so zu platzieren, dass sich deren Sichtbereiche so ergänzen, dass in der Summe der gesamt zu überwachende Raum beobachtet werden kann. Neben der Vielzahl von Sensoren werden dabei zwangsläufig Überschneidungen der Sichtbereiche in Kauf genommen, ohne eine wirkliche Redundanz zur Verminderung der Ausfallwahrscheinlichkeit des Systems zu erreichen.

Es ist Aufgabe der Erfindung, eine Überwachungsvorrichtung für einen Laserstrahl bereitzustellen, die bei einfacher und kostengünstiger Fertigung eine sichere und zuverlässige Überwachung eines Laserstrahls ermöglicht.

Gelöst wird die Aufgabe durch die Merkmale des Anspruchs 1. Auf diese Weise ist eine Überwachung des Laserstrahls derart realisierbar, dass im Normalbetrieb der Laserstrahl durch die Durchgangsöffnung geleitet ist. Wird stattdessen der Laserstrahl ausgelenkt und trifft auf den Körper, so wird dieses von dem Sensor erkannt. Somit ist ein Fehlerfall erkennbar. Dabei kann die Durchgangsöffnung eine beliebige Form aufweisen.

Die Unteransprüche haben vorteilhafte Weiterbildungen der Erfindung zum Inhalt. Der Körper ist ein Hohlprofil. Bevorzugt ist vorgesehen, dass das Hohlprofil einen geschlossenen Querschnitt aufweist. Dabei kann das Hohlprofil beliebige geometrische Formen annehmen. Erfindungsgemäß ist das Hohlprofil ein Lichtleiter. Die Verwendung eines Hohlprofils als Körper erlaubt die Reduzierung des Überwachungsbereichs des Laserstrahls auf eine zweidimensionale Ebene. So bildet das Hohlprofil in der zweidimensionalen Ebene eine geschlossene geometrische Figur, wobei vorgesehen ist, dass der Laserstrahl im Normalbetrieb senkrecht auf diese zweidimensionale Ebene auftrifft. Somit ist der Laserstrahl durch einen Punkt in der zweidimensionalen Ebene repräsentiert. Die Überwachung beschränkt sich somit darauf, festzustellen, ob der Punkt innerhalb des geometrischen Körpers liegt oder auf dem geometrischen Körper auftrifft. Somit ist die Überwachung sehr einfach, insbesondere im Hinblick auf die im Stand der Technik verwendete

Überwachung eines gesamten dreidimensionalen Raums durch eine Vielzahl von lichtempfindlichen Sensoren.

Erfindungsgemäß weist das Hohlprofil eine Mantelfläche auf, wobei der Sensor an der Mantelfläche angeordnet ist. Dabei ist vorgesehen, dass der Sensor ein lichtempfindlicher Sensor ist, der eine Lichteinkopplung des Laserstrahls in das Hohlprofil erkennt. Somit ist für den Sensor erkennbar, wenn der Laserstrahl auf das Hohlprofil auftrifft. Dazu ist mit dem Sensor zumindest ein Licht von der Wellenlänge des Laserstrahls erkennbar.

Ebenso ist bevorzugt vorgesehen, dass das Hohlprofil eine erste Stirnfläche und eine zweite Stirnfläche aufweist, wobei die zweite Stirnfläche eine größere Rauigkeit als die erste Stirnfläche aufweist. Durch die unterschiedlichen Oberflächenrauigkeiten, die insbesondere unter Berücksichtigung des Brechungsindexes des Materials des Hohlprofils gewählt sind, ist der Laserstrahl in das Hohlprofil einkoppelbar. Somit wird der Laserstrahl unabhängig von dessen Einfallswinkel in den Körper immer auf eine vordefinierte Fläche des Hohlprofils gelenkt. Da insbesondere vorgesehen ist, dass der Sensor an der Mantelfläche des Hohlprofils angeordnet ist, wird der Laserstrahl vorteilhafterweise auf diese Mantelfläche gelenkt. Somit ist insbesondere möglich, dass der Körper eine beliebige Form aufweist, da der Laserstrahl stets auf eine vordefinierte Fläche des Hohlprofils lenkbar ist.

Das Hohlprofil ist vorteilhafterweise aus einem lichtleitenden Material, bevorzugt aus Acrylglas, gefertigt. Dieses erlaubt eine einfache und kostengünstige Herstellung des Hohlprofils, wobei gleichzeitig eine Bearbeitung von Oberflächenrauigkeiten des Hohlprofils ermöglicht ist. Insbesondere eignet sich Acrylglas optimal zur Lichteinkopplung des Laserstrahls.

Gemäß einer nicht beanspruchten Alternative ist der Körper ein elektrischer Leiter. Dabei ist der elektrische Leiter vorteilhafterweise zu zumindest einer Windung geformt. Der Sensor wiederum ist zur Messung eines Widerstands des elektrischen Leiters ausgebildet. Bei hohen Laserleistungen kann eine Einkopplung des Laserlichts in den Körper nicht mehr möglich sein, da die Intensität des Laserstrahls den Körper zerstören oder beschädigen würde. Somit ist der Körper bevorzugt ein elektrischer Leiter, der bei Auftreffen des Laserstrahls beschädigt oder durchtrennt wird. Durch die Formung des elektrischen Leiters zu zumindest einer Windung ist wiederum das zuvor beschriebene Prinzip erreicht, dass eine geschlossene zweidimensionale Form vorliegt, wobei der Laserstrahl die zweidimensionale Form unter Normalbedingungen im rechten Winkel schneidet. Sollte ein Fehlerfall vorliegen, so trifft der Laserstrahl auf den elektrischen Leiter, wodurch dieser beschädigt wird. Der Widerstand des Leiters wird dadurch verändert, sodass der Sensor durch die Messung des elektrischen Widerstands des Leiters erfassen kann, ob dieser beschädigt oder zerstört ist. Wiederum ist auf diese Weise erkennbar, ob der Laserstrahl den Körper getroffen hat. Die Erfassung des elektrischen Widerstands kann entweder durch eine Messung des Widerstands oder durch das Aussenden eines Testsignals erfolgen, wobei in letzterem Fall, ein Maß für den Widerstand anhand des nach Durchlaufen des elektrischen Leiters empfangenen Testsignals ermittelbar ist.

Besonders vorteilhaft ist der elektrische Leiter kreisförmig geführt, sodass eine runde Durchgangsöffnung vorhanden ist. Diese vereinfacht die Herstellung und Montage des als elektrischen Leiter ausgebildeten Körpers.

Erfindungsgemäß ist der Körper ein Lichtwellenleiter. Besonders vorteilhaft umfasst der Lichtwellenleiter zumindest eine Glasfaser. Dabei ist der Lichtwellenleiter zu zumindest einer Windung geformt. Der Sensor wiederum ist zum Empfang einer in den Lichtwellenleiter gesendeten Nachricht ausgebildet. Dabei ist das Überwachungsprinzip analog zu dem Fall des elektrischen Leiters. Im Normalbetrieb ist der Laserstrahl senkrecht zu einem Querschnitt der Windung geleitet, sodass dieser durch die von der Windung geformte Durchgangsöffnung verläuft. Wird der Laserstrahl jedoch ausgelenkt, so trifft dieser auf den Lichtwellenleiter und beschädigt oder zerstört diesen. Damit kann der Sensor eine in den Lichtwellenleiter gesendet Nachricht nicht oder nicht korrekt empfangen. Besonders vorteilhaft ist der Sensor auch zum Aussenden der Nachricht in den Lichtwellenleiter ausgebildet, wobei der Sensor insbesondere periodisch eine Nachricht in den Lichtwellenleiter sendet. Sollte diese Nachricht nicht oder nicht korrekt empfangen werden, so ist auf eine Beschädigung des Lichtwellenleiters und damit auf einen Fehlerfall beim Betrieb des Laserstrahls zu schließen. Der Vorteil der Verwendung des Lichtwellenleiters liegt insbesondere darin, dass die Überwachungsvorrichtung nicht durch äußere elektromagnetische Strahlung beeinflussbar ist. Ebenso sendet die Überwachungsvorrichtung selbst keine elektromagnetische Strahlung aus. Somit ist die Überwachungsvorrichtung sehr robust gegen Störungen und kann auch in Umgebungen eingesetzt werden, die nicht durch elektromechanische Strahlung gestört werden dürfen.

Die Erfindung umfasst weiterhin eine Laservorrichtung, die eine Laserquelle und eine zuvor genannte Überwachungsvorrichtung umfasst. Dabei ist vorgesehen, dass die Laserquelle derart ausgebildet ist, den Laserstrahl durch die Durchgangsöffnung des Körpers der Überwachungsvorrichtung auszusenden. Insbesondere weist der Körper einen eingeschlossenen Querschnitt auf, wobei der Laserstrahl von der Laserquelle derart ausgesandt wird, dass der Laserstrahl den Querschnitt senkrecht schneidet. Die Laservorrichtung ist somit sehr sicher und zuverlässig zu betreiben, da durch die Überwachungsvorrichtung ein Fehlerfall erkannt werden kann. Gleichzeitig ist die Laservorrichtung sehr einfach und kostengünstig herstellbar, da insbesondere die Überwachungsvorrichtung einfach und kostengünstig aufgebaut ist.

Schließlich betrifft die Erfindung ein Verfahren zum Überwachen eines Laserstrahls. Das Verfahren umfasst die Schritte von Anspruch 6. Zunächst wird ein Laserstrahl von einer Laserquelle ausgesandt. Dabei wird der Laserstrahl durch eine Durchgangsöffnung eines Körpers geleitet. Insbesondere erfolgt eine Ausbreitung des Laserstrahls konzentrisch zu einer Mittelachse der Durchgangsöffnung. Anschließend erfolgt ein Erkennen einer Einkopplung des ausgesandten Laserstrahls in den Körper. Zusätzlich dazu kann ein Erkennen einer Beschädigung des Körpers durch den ausgesandten Laserstrahl erfolgen. Die beiden genannten Schritte des Erkennens können gleichzeitig ausgeführt werden. Ein Abweichen einer Ausbreitungsrichtung des Laserstrahls ist erkennbar, da dieser nicht mehr durch die Durchgangsöffnung sondern auf den Körper geleitet wird. Somit ist erkennbar, dass ein Fehlerfall bei der Aussendung des Laserstrahls vorliegt.

Die Erfindung wird nun anhand von Ausführungsbeispielen mit Bezug auf die beigefügten Zeichnungen im Detail beschrieben. In den Zeichnungen ist
- Figur 1: eine schematische Abbildung einer Laservorrichtung mit einer Überwachungsvorrichtung, gemäß einem Ausführungsbeispiel der Erfindung,
- Figur 2: eine weitere schematische Abbildung der Laservorrichtung mit der Überwachungsvorrichtung gemäß dem Ausführungsbeispiel der Erfindung,
- Figur 3: eine schematische Abbildung der Laservorrichtung mit einer alternativen Überwachungsvorrichtung gemäß dem Ausführungsbeispiel der Erfindung,
- Figur 4: eine schematische Abbildung einer Laservorrichtung mit einer Überwachungsvorrichtung gemäß einem nicht beanspruchten ersten Beispiel,
- Figur 5: eine weitere schematische Abbildung der Laservorrichtung mit der Überwachungsvorrichtung gemäß dem nicht beanspruchten ersten Beispiel,
- Figur 6: eine schematische Abbildung einer Laservorrichtung mit einer Überwachungsvorrichtung gemäß einem nicht beanspruchten zweiten Beispiel, und
- Figur 7: eine weitere schematische Abbildung der Laservorrichtung mit der Überwachungsvorrichtung gemäß dem nicht beanspruchten zweiten Beispiel.

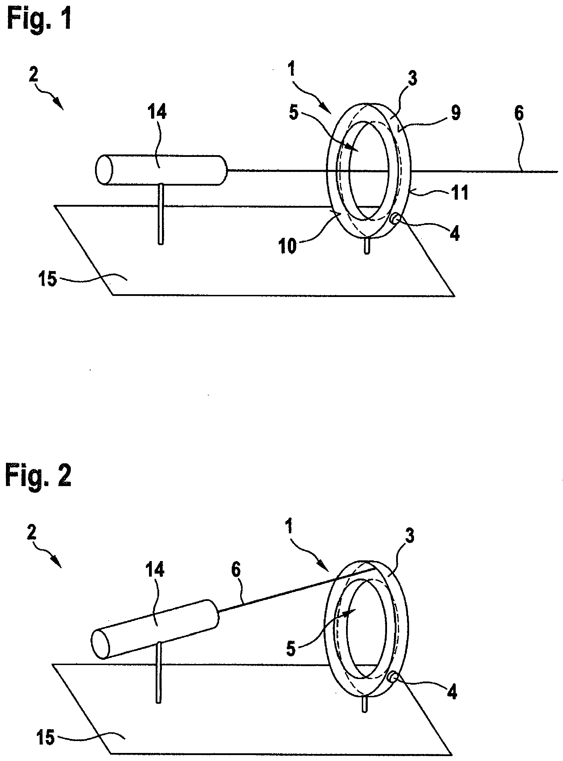

Figur 1 zeigt schematisch eine Laservorrichtung 2, die eine Laserquelle 14 und eine Überwachungsvorrichtung 1 umfasst. Dabei weist die Überwachungsvorrichtung 1 ein ringförmiges Hohlprofil 3 auf, das aus Acrylglas gefertigt ist. Die Laserquelle 14 und die Überwachungsvorrichtung 1 sind auf einer Grundplatte 15 derart montiert, dass die Laserquelle 14 einen Laserstrahl 6 durch eine Durchgangsöffnung 5 des Hohlprofils 3 der Überwachungsvorrichtung 1 aussendet. Dabei ist durch die Überwachungsvorrichtung 1 ein Fehlerfall erkennbar, wobei ein Fehlerfall dann vorliegt, wenn der Laserstrahl 6 nicht durch die Durchgangsöffnung 5 des Hohlprofils 3 geleitet wird, sondern insbesondere auf das Hohlprofil 3 auftrifft. Sollte der Laserstrahl 6 auf das Hohlprofil 3 auftreffen, so ist vorgesehen, dass der Laserstrahl 6 in das Hohlprofil 3 eingekoppelt wird. Dazu weist das Hohlprofil 3 eine erste Stirnfläche 10 und eine zweite Stirnfläche 11 auf. Die erste Stirnfläche 10 ist der Laserquelle 14 zugewandt. Außerdem ist vorgesehen, dass die zweite Stirnfläche 11 eine höhere Oberflächenrauigkeit als die erste Stirnfläche 10 aufweist.

Außerdem weist das Hohlprofil 3 eine Mantelfläche 9 auf. Auf dieser Mantelfläche 9 ist ein Sensor 4 montiert, wobei mit dem Sensor 4 Licht derselben Wellenlänge wie des Laserstrahls 6 detektierbar ist. Sollte der Laserstrahl 6 durch die Durchgangsöffnung 5 des Hohlprofils 3 verlaufen, so ist mit dem Sensor 4 kein Licht detektierbar.

Wird die Laserquelle 14 ausgelenkt oder der Laserstrahl 6 abgelenkt, so trifft der Laserstrahl 6 das Hohlprofil 3 und wird nicht mehr durch die Durchgangsöffnung 5 geleitet. Dieser Fall ist in Figur 2 gezeigt. Dabei zeigt Figur 2 denselben Aufbau wie in Figur 1, wobei lediglich die Laserquelle 14 den Laserstrahl 6 in eine andere Richtung aussendet.

Sobald der Laserstrahl 6 auf das Hohlprofil 3 auftrifft, wird der Laserstrahl 6 in das Hohlprofil 3 eingekoppelt. Durch die unterschiedlichen Oberflächenrauigkeiten zwischen der ersten Stirnfläche 10 und der zweiten Stirnfläche 11 erfolgt die Einkopplung unabhängig von einem Einfallswinkel und einem Ort, an dem der Laserstrahl 6 auf das als Lichtleiter ausgebildete Hohlprofil 3 auftrifft. Durch das Hohlprofil 3 wird das eingekoppelte Licht des Laserstrahls 6 auf die Mantelfläche 9 des Hohlprofils 3 geleitet. Dabei ist vorgesehen, dass die Mantelfläche 9 eine gleichbleibende Oberflächenrauigkeit aufweist, sodass sich das Licht des Laserstrahls 6 gleichmäßig auf der Mantelfläche 9 verteilt. Somit ist das Licht des eingekoppelten Laserstrahls 6 an jeder beliebigen Stelle der Mantelfläche 9 durch den Sensor 4 detektierbar. Dadurch kann der Sensor 4 an einer beliebigen Stelle auf der Mantelfläche 9 platziert werden. Es ist daher feststellbar, dass der Laserstrahl 6 nicht mehr durch die Durchgangsöffnung 5 des Hohlprofils 3 geleitet wird, sodass ein Fehlerfall erkannt wurde.

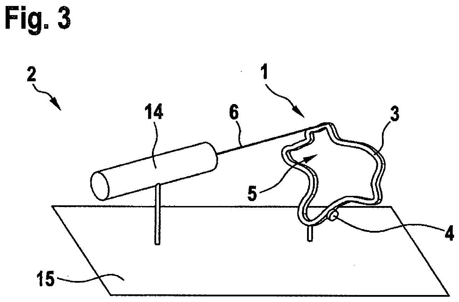

Da das eingekoppelte Licht des Laserstrahls 6 auf der gesamten Mantelfläche 9 des Hohlprofils 3 sichtbar ist, ist insbesondere nicht vorgeschrieben, wo der Sensor 4 angebracht sein muss. Es ist lediglich vorgesehen, dass der Sensor 4 an einer beliebigen Stelle der Mantelfläche 9 angeordnet ist. Ebenso ist eine Form der Mantelfläche 9 nicht vorgeschrieben, solange diese keine Sprünge oder Kanten aufweist und dadurch die Weiterleitung des Lichts unterbrochen wird. So ist insbesondere auch der zweidimensionale Querschnitt des Hohlprofils 3 beliebig wählbar. Ein Beispiel für eine derartige beliebige Wählbarkeit ist in Figur 3 gezeigt.

Figur 3 zeigt die gleiche Abbildung wie Figur 2, wobei lediglich die Form des Hohlprofils 3 verändert wurde. Es ist daher ersichtlich, dass das Hohlprofil 3 sehr flexibel aufgebaut werden kann und somit optimal an äußere Bedingungen angepasst werden kann. Dabei sind insbesondere keine Symmetrien des Hohlprofils 3 notwendig, lediglich muss das Hohlprofil 3 einen geschlossenen Querschnitt aufweisen. Somit ist mit einem minimalen Aufwand ein maximaler Überwachungsbereich realisiert. Größe und Form der Durchgangsöffnung 5 wird durch die Anforderungen an die maximal zulässige Strahlabweichung definiert. Je kleiner diese Abweichung sein darf, oder je genauer der Laserstrahl 6 dem vorgegebenen Weg folgen muss, desto kleiner muss die Durchgangsöffnung 5 sein. Ist die zulässige Abweichung in alle Richtungen gleich groß, ergibt sich die Durchgangsöffnung 5 zu einer kreisförmigen Durchtrittsöffnung.

In dem Ausführungsbeispiel erfolgte eine Erkennung eines Fehlerfalls durch Lichteinkopplung des Laserstrahls 6 in das Hohlprofil 3. Sollte jedoch eine optische Leistung des Laserstrahls 6 zu hoch für eine Lichteinkopplung sein, so kann der Laserstrahl 6 das Hohlprofil 3 beschädigen oder in Abhängigkeit des verwendeten Materials und der verwendeten Laserleistung, zerstören. In diesem Fall ist das Ausführungsbeispiel nicht vorteilhaft anwendbar. Hierzu werden ein nicht beanspruchtes erstes und zweites Beispiel vorgestellt, welche vorteilhafterweise auch bei sehr hohen Leistungen des Laserstrahls 6 verwendet werden können.

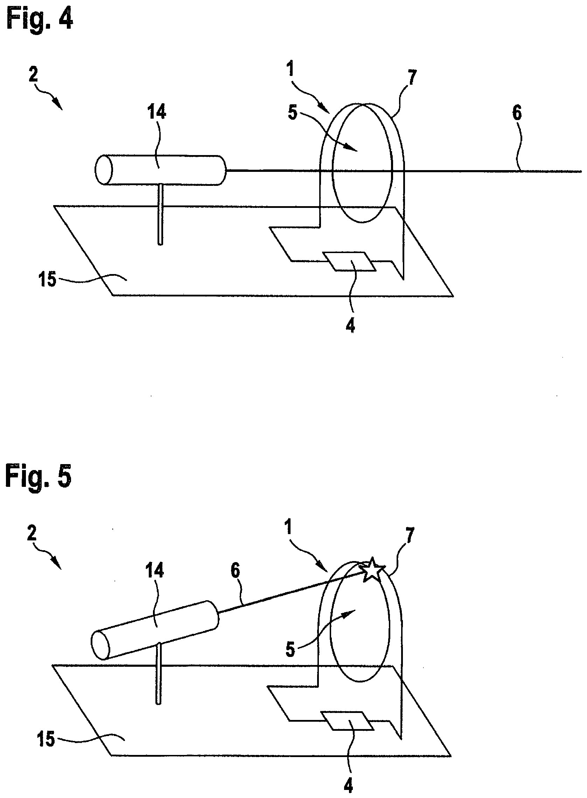

Figur 4 zeigt eine Laservorrichtung 2, die eine Laserquelle 14 und eine Überwachungsvorrichtung 1 gemäß einem nicht beanspruchten ersten Beispiel aufweist. Wiederum sind Laserquelle 14 und Überwachungsvorrichtung 1 auf einer Grundplatte 15 montiert. Die Überwachungsvorrichtung 1 umfasst einen elektrischen Leiter 7, der zu mindestens einer Windung geformt ist. Somit bildet die Windung eine Durchgangsöffnung 5. Die Laserquelle 14 ist eingerichtet, einen Laserstrahl 6 senkrecht durch die Durchgangsöffnung 5 der Windung des elektrischen Leiters 7 zu senden. Der Sensor 4 ist ausgebildet, einen elektrischen Widerstand des elektrischen Leiters 7 zu bestimmen. Dazu ist der Sensor 4 entweder ausgebildet, einen elektrischen Widerstand des Körpers 7 zu messen, oder den Widerstand indirekt mittels eines ausgesandten Testsignals zu bestimmen.

Wird der elektrische Widerstand des elektrischen Leiters 7 durch Aussenden eines Testsignals bestimmt, so ist insbesondere lediglich vorgesehen, dass der Widerstand binär bestimmt wird. Dabei wird zwischen einem geschlossenen und einem unterbrochenen Stromkreis unterschieden. Dieses bedeutet, dass von einem geschlossenen Stromkreis ausgegangen wird, solange ein ausgesandtes Testsignal empfangen werden kann. Sollte dieses Testsignal jedoch nicht empfangen werden können, so ist von einem unterbrochenen Stromkreis und damit einer Beschädigung des elektrischen Leiters 7 auszugehen.

Wird der Laserstrahl 6 nicht wie im Normalfall durch die Durchgangsöffnung 5 des elektrischen Leiters 7 geleitet, sondern trifft der Laserstrahl 6 auf den elektrischen Leiter 7 auf, so durchtrennt der Laserstrahl 6 den elektrischen Leiter 7. Dieses ist in Figur 5 gezeigt. Damit steigt der elektrische Widerstand des elektrischen Leiters 7 an, was von dem Sensor 4 erkennbar ist.

Um ein sicheres und zuverlässiges Durchtrennen des elektrischen Leiters 7 durch den Laserstrahl 6 zu gewährleisten, ist eine Dicke des elektrischen Leiters 7 auf die Intensität der Laserquelle 14 und/oder des Laserstrahls 6 abgestimmt. So ist sichergestellt, dass bei Auftreffen des Laserstrahls 6 auf den elektrischen Leiter 7 eine sichere und zuverlässige Durchtrennung des elektrischen Leiters 7 erfolgt.

Der elektrische Leiter 7 ist in dem nicht beanspruchten ersten Beispiel annähernd kreisförmig geführt. Da die Form des elektrischen Leiters 7 dessen elektrischen Widerstandswert nicht beeinflusst, ist alternativ vorgesehen, dass der elektrischen Leiter 7 in jeder beliebigen Form geführt ist, so lange eine zweidimensionale Projektion des elektrischen Leiters 7 einen geschlossenen Querschnitt ergibt. Auch hier gilt insbesondere, dass die zulässige Abweichung des Laserstrahls von seinem Weg den maximalen Radius der Wicklung festlegt.

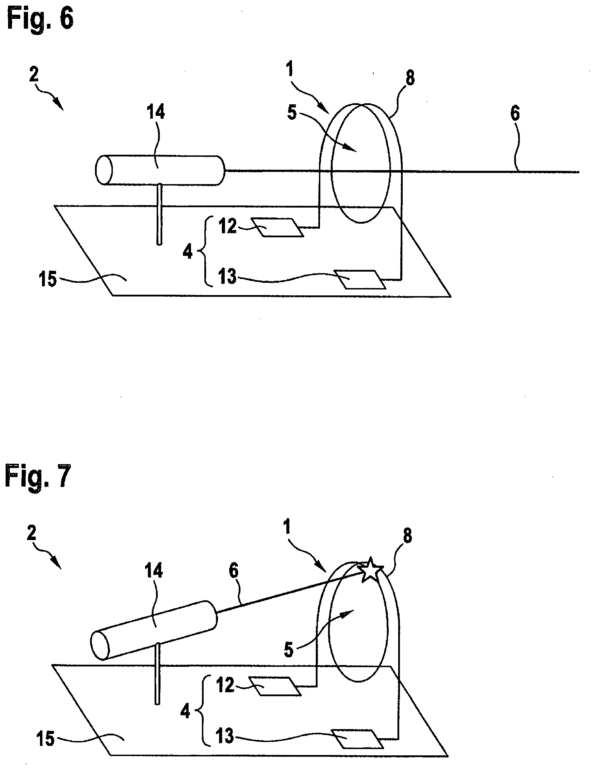

Ein nicht beanspruchtes zweites Beispiel der Überwachungsvorrichtung 1 ist in den Figuren 6 und 7 gezeigt.

Figur 6 zeigt eine Laservorrichtung 2 mit einer Überwachungsvorrichtung 1 gemäß dem nicht beanspruchten zweiten Beispiel. Die Laservorrichtung 2 umfasst neben der Überwachungsvorrichtung 1 eine Laserquelle 14, wobei die Laserquelle 14 und die Überwachungsvorrichtung 1 jeweils auf einer Grundplatte 15 montiert sind.

Die Überwachungsvorrichtung 1 umfasst einen als Lichtwellenleiter 8 ausgebildeten Körper. Dabei ist der Lichtwellenleiter 8 analog zu dem elektrischen Leiter 7 so geführt, dass der Lichtwellenleiter 8 eine Windung bildet. Diese Windung definiert somit die Durchgangsöffnung 5 des Lichtwellenleiters 8. Der Sensor 4 umfasst eine Sendevorrichtung 12 und eine Empfangsvorrichtung 13, wobei die Sendevorrichtung 12 ausgebildet ist, ein Signal in den Lichtwellenleiter 8 einzukoppeln. Die Empfangsvorrichtung 13 ist eingerichtet, das von der Sendevorrichtung 12 eingekoppelte Signal aus dem Lichtwellenleiter 8 zu empfangen.

Wird der Lichtwellenleiter 8 von dem Laserstrahl 6 beschädigt, weil dieser, wie in Figur 7 gezeigt, auf den Lichtwellenleiter 8 auftrifft, so ist das Empfangen des von der Sendevorrichtung 12 eingekoppelten Signals durch die Empfangsvorrichtung 13 nicht mehr möglich. Somit ist auf eine Beschädigung des Lichtwellenleiters 8 und damit auf ein Auftreffen des Laserstrahls 6 auf den Lichtwellenleiter 8 rückzuschließen. Daher folgt das Prinzip des nicht beanspruchten zweiten Beispiels dem Prinzip des nicht beanspruchten ersten Beispiels, wobei anstatt des elektrischen Leiters 7 der Lichtwellenleiter 8 verwendet wird. Der Lichtwellenleiter 8 ist insbesondere durch eine Vielzahl von Glasfasern gebildet.

Die Überwachungsvorrichtung 1 gemäß dem nicht beanspruchten zweiten Beispiel ist vorteilhafterweise nicht durch äußere elektromagnetische Strahlung beeinflussbar. Ebenso verunreinigt die Überwachungsvorrichtung 1 gemäß dem nicht beanspruchten zweiten Beispiel die Umgebung nicht selbst mit elektromagnetischer Strahlung. Da Lichtwellenleiter zumeist einen vordefinierten minimalen Biegeradius aufweisen, ist insbesondere vorgesehen, dass der Lichtwellenleiter 8 spiralförmig geführt ist, sodass eine kreisförmige Projektion des Lichtwellenleiters 8 in einer zweidimensionalen Ebene vorhanden ist.

Sollte mit dem Laserstrahl 6 ein Durchtrennen des elektrischen Leiters 7 oder des Lichtwellenleiters 8 erfolgt sein, so sind Verbrennungsrückstände vorhanden. Damit ist es vorteilhaft, die Laservorrichtung 2 vor einer erneuten Inbetriebnahme zu reinigen, um Niederschläge auf optischen Bauteilen, wie Spiegeln oder Linsen, zu beseitigen.

### Bezugszeichenliste

- 1: Überwachungsvorrichtung
- 2: Laservorrichtung
- 3: Hohlprofil
- 4: Sensor
- 5: Durchgangsöffnung
- 6: Laserstrahl
- 7: elektrischer Leiter
- 8: Lichtwellenleiter
- 9: Mantelfläche
- 10: Erste Stirnfläche
- 11: Zweite Stirnfläche
- 12: Sendevorrichtung
- 13: Empfangsvorrichtung
- 14: Laserquelle
- 15: Grundplatte

## Patentansprüche

1. Überwachungsvorrichtung (1) für einen Laserstahl (6), umfassend einen als Lichtwellenleiter in Form eines Hohlprofils ausgebildeten Körper (3) mit einer Durchgangsöffnung (5), und einen lichtempfindlichen Sensor (4), der an einer Mantelfläche des Körpers (3) montiert ist, wobei der Laserstrahl (6) durch die Durchgangsöffnung (5) leitbar ist, und wobei mit dem Sensor (4) ein Auftreffen des Laserstrahls (6) auf den Körper (3) erfassbar ist.

2. Überwachungsvorrichtung (1) nach Anspruch 1, **dadurch gekennzeichnet, dass** das Hohlprofil (3) einen geschlossenen Querschnitt aufweist.

3. Überwachungsvorrichtung (1) nach einem der Ansprüche 1 oder 2, **dadurch gekennzeichnet, dass** das Hohlprofil (3) eine erste Stirnfläche (10) und eine zweite Stirnfläche (11) aufweist, wobei die zweite Stirnfläche (11) eine größere Rauigkeit aufweist als die erste Stirnfläche (10).

4. Überwachungsvorrichtung (1) nach einem der vorhergehenden Ansprüche, **dadurch gekennzeichnet, dass** das Hohlprofil (3) aus einem optisch leitenden Material, insbesondere Acrylglas, gefertigt ist.

5. Laservorrichtung (2), umfassend eine Laserquelle (14) und eine Überwachungsvorrichtung (1) nach einem der vorhergehenden Ansprüche, wobei die Laserquelle (14) ausgebildet ist, den Laserstrahl (6) durch die Durchgangsöffnungen (5) des Körpers (3) der Überwachungsvorrichtungen (1) auszusenden.

6. Verfahren zum Überwachen eines Laserstrahls, umfassend die Schritte
- Aussenden eines Laserstrahls (6) von einer Laserquelle (14) durch eine Durchgangsöffnung (5) eines als Lichtwellenleiter in Form eines Hohlprofils ausgebildeten Körpers (3), auf dessen Mantelfläche ein lichtempfindlicher Sensor (4) montiert ist, und
- Erkennen einer Einkopplung des ausgesandten Laserstrahls (6) in den Körper (3) durch den lichtempfindlichen Sensor (4).

## Claims

1. Monitoring device (1) for a laser beam (6), comprising a body (3) provided as an optical waveguide in the form of a hollow profile with a through-aperture (5), and a light-sensitive sensor (4) mounted on a peripheral surface of the body (3), wherein the laser beam (6) is guidable via the through-aperture (5), and wherein the impact of the laser beam (6) on the body (3) is recordable by means of the sensor (4).

2. Monitoring device (1) according to claim 1, **characterised in that** the hollow profile (3) has a closed cross-section.

3. Monitoring device (1) according to any one of claims 1 or 2, **characterised in that** the hollow profile (3) has a first end face (10) and a second end face (11), the second end face (11) being of greater roughness than the first end face (10).

4. Monitoring device (1) according to any one of the preceding claims, **characterised in that** the hollow profile (3) is manufactured from an optically conducting material, in particular acrylic glass.

5. Laser device (2), comprising a laser source (14) and a monitoring device (1) according to any one of the preceding claims, wherein the laser source (14) is provided for emitting the laser beam (6) via the through- apertures (5) of the body (3) of the monitoring devices (1) .

6. Method of monitoring a laser beam, comprising the follwing steps:
- emission of a laser beam (6) from a laser source (14) via a through-aperture (5) of a body (3) provided as an optical waveguide in the form of a hollow profile, on whose peripheral surface a light-sensitive sensor (4) is mounted, and
- detection by means of the light-sensitive sensor (4) of a launching of the emitted laser beam (6) into the body (3).

## Revendications

1. Dispositif de surveillance (1) pour un rayon laser (6), comprenant un corps (3) configuré comme un fibre optique sous la forme d'un profilé creux comportant une ouverture de passage (5), ainsi qu'un capteur photosensible (4), qui est monté sur une surface de revêtement du corps (3), dans lequel le rayon laser (6) peut être dirigé à travers l'ouverture de passage (5), et dans lequel le capteur (4) permet de détecter l'incidence du rayon laser (6) sur le corps (3).

2. Dispositif de surveillance (1) selon la revendication 1, **caractérisé en ce que** le profilé creux (3) présente une coupe transversale fermée.

3. Dispositif de surveillance (1) selon une des revendications 1 ou 2, **caractérisé en ce que** le profilé creux (3) présente une première surface frontale (10) et une seconde surface frontale (11), la seconde surface frontale (11) ayant une rugosité supérieure à la première surface frontale (10).

4. Dispositif de surveillance (1) selon une des revendications précédentes, **caractérisé en ce que** le profilé creux (3) est fabriqué à partir d'un matériau conducteur optiquement, en particulier en verre acrylique.

5. Dispositif laser (2), comprenant une source laser (14) et un dispositif de surveillance (1) selon une des revendications précédentes, dans lequel la source laser (14) est configurée pour émettre le rayon laser (6) à travers les ouvertures de passage (5) du corps (3) des dispositifs de surveillance (1).

6. Procédé pour surveiller un rayon laser, comprenant les étapes :
- émettre un rayon laser (6) depuis une source laser (14) à travers une ouverture de passage (5) d'un corps (3) configuré comme un fibre optique sous la forme d'un profilé creux, un capteur photosensible (4) étant monté sur sa surface de revêtement, et
- reconnaître une injection du rayon laser émis (6) dans le corps (3) par l'intermédiaire du capteur photosensible (4).
